# EUROPEAN PATENT APPLICATION

(11) **EP 1 536 611 A2**
(43) Date of publication of application: **01.06.2005**
(21) Application number: 04105959.3
(22) Date of filing: 22.11.2004
(51) Int. Cl.: H04L 29/06, H04M 1/253, H04N 1/00

(54) **Internet telephone and fascimile device**

(30) Priority: 28.11.2003 US 722438
(71) Applicant: Telogy Networks Inc., Germantown, MD 20874 (US)
(72) Inventor: Adlakha, Sachin, MD 20886, Maryland (US); Fruth, Frank Edward, MD 20874, Gaithersburg (US); Kumar, Samant, Germantown, MD Maryland 20874 (US)
(74) Representative: Holt, Michael

(57) **Abstract**

A fax-aware telephone (38) for handling facsimile transmissions over a computer network, such as the Internet, that includes a facsimile processing unit (40) for handling an incoming or outgoing facsimile call, a voice processing unit (42) for handling an incoming or outgoing voice call, a memory unit (44) for storing an incoming facsimile transmission, and a file transfer protocol client (46) for transferring a facsimile transmission to the computer network, an external storage device, or to a printer driver. The fax-aware telephone (38) handles a facsimile call and a voice call together over a single data line from a computer network.

## Description

### FIELD OF THE INVENTION

The invention relates to receiving a digital file transmission of a facsimile that is received into a digital telephone connected to a computer network. More specifically, the invention relates to a digital telephone capable of receiving voice and facsimile transmissions over a computer network using Internet Protocol.

### BACKGROUND OF THE INVENTION

A conventional fax over packet application enables the interworking of standard analog fax machines with packet networks. The traditional method extracts the fax image from a fax machine's analog signal and carries it as digital data over the packet network. Packet networks used to transport the fax include Internet (IP), Frame Relay, and ATM. Fax data in its original form is digital, however it is modulated and converted to analog for transmission over the public switched telephone network (PSTN). A fax over packet interworking function reverses the analog conversion and transmits digital data over a packet network. If the receiving fax machine is a conventional analog device, the data is converted back to analog. However, if the receiving fax machine is a digital device (e.g., fax modem in a computer), the data remains in digital format. The conversion process reduces the overall bandwidth required to send the fax because the digital form is much more efficient and the fax transmission is half duplex.

Various protocols exist for transmission and receipt of facsimiles over low-delay analog voice-grade telephone lines. Once such protocol is Group 3 (G3), defined in Recommendation T.30, "Procedures for document facsimile transmission in the general switched telephone network," which is hereby incorporated herein by reference. T.30 is an International Telecommunication Union (ITU) recommendation for facsimile transmissions over a telephone network. The T.30 protocol describes the formatting of non-page data, such as messages that are used for capabilities negotiation. The recommendation defines three different protocols for facsimile transfer, Group 1, 2 and 3. Only Group 3 (G3) is in common use today. While the G3 protocol is defined for analog transmission, the backbone network for modern telephone systems is generally digital. In addition, the ITU Recommendation T.38 "Procedures for real-time Group 3 facsimile communication over IP networks" defines real-time protocols for transmission of real-time fax over an IP network.

When facsimile devices are connected through a digital network, such as packet, ATM, or Frame Relay, the sending and receiving devices are not directly connected. In a packet network, the facsimile information is packetized at a sending end, sent over the packet network, and reassembled into a facsimile format at the receiving end before presentation to the receiving facsimile device. The connection over a packet network is not a constant connection and often experiences line delays, errors, and/or packet loss which must be hidden from the facsimile device by a gateway in order to avoid error detection by the receiving fax device. A fax control protocol unit compensates for the effects of timing and lost packets caused by the packet network. The unit prevents the local fax machine from timing out while waiting for a response from the other end by generating HDLC flags. A fax network driver unit assembles and disassembles fax packets to be transmitted over the packet network and is the interface unit between the fax protocol unit and network modules.

As stated previously, the ITU has specified recommendation T.38 as a standard for carrying fax data over packet networks in real-time. While the preferred exemplary embodiment handles data according to T.38 protocols for fax over IP (FoIP), one skilled in the art will recognize that any system for sending digital facsimile data through a network will fall within the teachings of the present invention. G3 and other standard fax protocols allow traditional fax devices to work seamlessly without any knowledge of the packet transport while at the same time improving reliability and reducing network bandwidth utilization and cost. Recommendation T.38 involves demodulating the signal in the access gateway, packetizing the data for transmission over the packet network, transmitting the data, and then remodulating it as per the fax protocol at the terminating side.

Conventional fax devices consist of a separate fax machine connected to the public switch telephone network (PSTN) directly or through a private branch exchange (PBX) which enables a user to send and receive fax. A computer with a fax modem card and appropriate software may also be used as a fax server. A problem with these conventional fax devices is that separate hardware devices are required to handle fax transmissions. Separate devices create additional capital costs, maintenance and configuration time and expense, additional desktop space and/or additional network space.

### SUMMARY OF THE INVENTION

With the advent and proliferation of Internet Protocol (IP) telephones that operate on a computer network, the present invention overcomes shortcomings of conventional devices by providing an integrated solution for both voice and fax over an IP network as a unified fax-aware IP phone. A fax aware IP phone is a device which enables a user to send or receive fax over standard IP phone. This integration eliminates a need for a separate fax machine and/or a fax telephone number and can be used a standard feature used in businesses, offices and homes. A fax aware IP phone replaces the need for a separate fax machine required to send fax over an IP network.

### BRIEF DESCRIPTION OF THE DRAWINGS

Preferred embodiments of the invention are discussed hereinafter in reference to the drawings, in which:
Figure 1 (prior art) is a schematic diagram illustrating a separate IP telephone and IP fax machine on a network.
Figure 2 is a schematic diagram of an exemplary embodiment of the present invention, illustrating a unified fax-aware IP telephone device on a network.
Figure 3 is a functional block diagram of an exemplary fax aware IP telephone.
Figure 4 is a flowchart of the call flow for an exemplary fax aware IP telephone.

### DETAILED DESCRIPTION OF THE INVENTION

The exemplary preferred embodiment of the present invention comprises a fax-aware Internet Protocol (IP) telephone (IPP) device that enables a user to send or receive a facsimile transmission over a standard IP telephone.

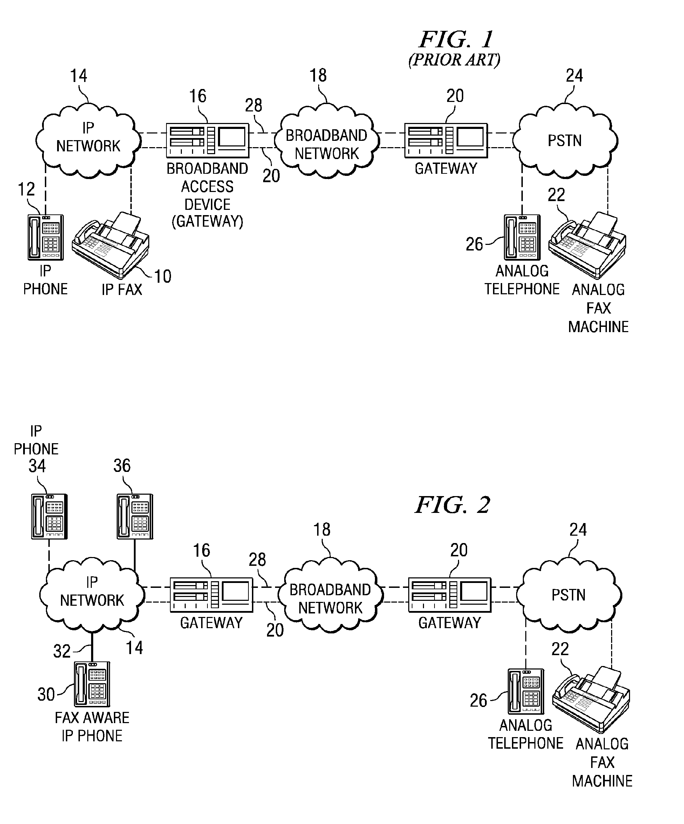

Figure 1 illustrates a functional diagram of a conventional Internet Protocol (IP) telephone and fax machine in a generic broadband computer network. Referring to Figure 1, an IP fax 10 sends and receives faxes through an IP network 14. IP network 14 may include a packet-switched network using TCP/IP, frame rely, ATM, or any network capable of transmitting IP protocols. The fax transmission 20 is directed to a facsimile port on a broadband access device (e.g., gateway 16), which is connected to a broadband network 18. The gateway 16 may connect to the broadband network 18 with a high speed Internet connection such as a digital subscriber line (DSL), cable modem, or T1/T5 line. Gateway 16 has multiple telephony ports, at least one for voice and one for fax. A conventional digital IP telephone 12 also connects to IP network 14 and send a voice transmission 28 to a telephony port on gateway 16 which formats packetized voice data for broadband network 18. The broadband network 18 can include the public Internet, a managed local area network or wide area network (LAN/WAN), or a virtual LAN. The voice transmission is received by far-end gateway 20 and routed through the PSTN 24 to a conventional analog telephone 26.

Fax transmission from IP fax machine 10 may be transmitted using protocols such as International Telecommunications Union (ITU) T.38 "Procedures for real-time Group 3 facsimile communication over IP networks." Packetized facsimile data sent to gateway 16 is then transmitted to a remote gateway 20 that may be located at a central office (CO) of a public telephone company. After reaching the far-end CO gateway 20, the packetized fax data is modulated from digital to analog signals for delivery to a conventional analog fax machine 22 that is in turn connected on the PSTN 24.

Figure 2 illustrates a schematic diagram of an IPP 30 connected to IP network 14. IPP 30 replaces the need for a separate IP fax 10 device that is to handle a facsimile transmission 28 over IP network 14. IPP 30 handles both voice and fax transmissions 32 together over a single data line. IPP 30 can route voice over packet calls 28 to an IP telephone 34 and fax-aware IP phone 36 connected to IP network 14 or to a remote conventional telephone 26 through gateways 16, 20 and PSTN 24. IPP 30 may also initiate a fax session to a conventional fax machine 22 connected to the PSTN 24 or to another fax-aware IP telephone 36 connected to IP network 14.

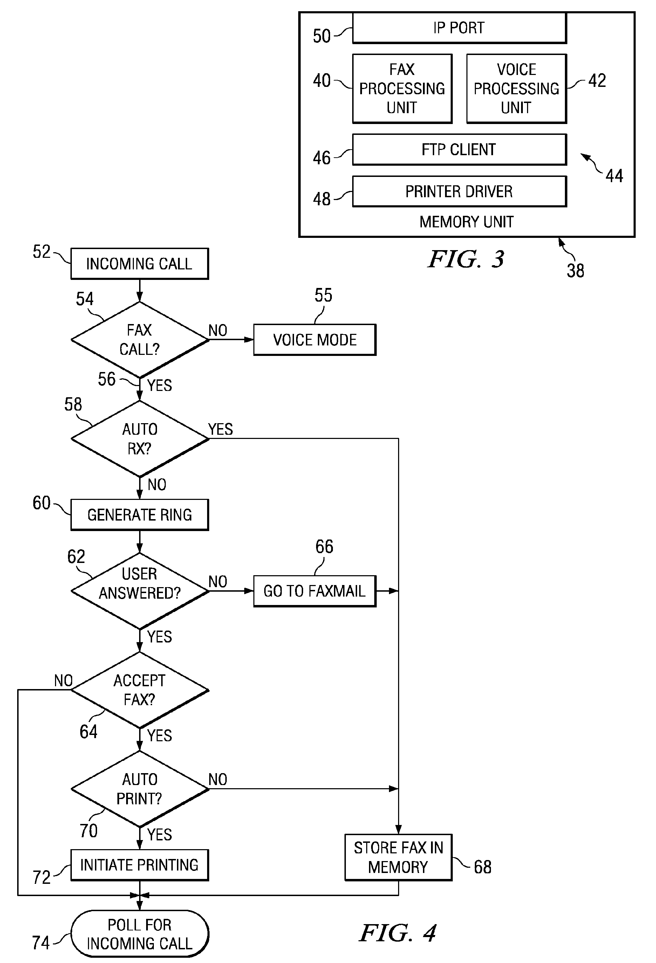

Figure 3 illustrates a functional diagram of an exemplary fax aware IPP 38. IPP 38 includes a fax processing unit 40 along with a voice processing unit 42. The fax processing unit handles fax calls and can be based on any ITU-T standard for packet-based fax. A memory unit 44 is used to store incoming fax transmissions. Memory unit 44 is also used to temporarily store a document which is queued for faxing out of IPP 38 to a remote fax machine (e.g., analog fax machine 22). A file transfer protocol (FTP) client 46 may be used to transfer the document to and from IP network 14. An incoming fax transmission to IPP 38 can be transmitted for paper printing over traditional network lines to a printer or saved to a personal computer (not shown). For this purpose a printer driver 48 sends fax data to a printer or the ftp client 46 sends fax data to a personal computer.

To send a fax from the IPP 30, a user would download the document from the network 14 using the FTP client 46 on the IPP 30. The document is either in a soft format or can be scanned and then downloaded on the IPP 30. The user then dials the desired number to which the document will be sent and initiates the fax transfer. The remote fax machine can either be a Fax aware IP phone 36 or a conventional fax machine 22. A user can also program to send the fax automatically without the user's intervention by identifying the file to send and the target phone number. The IPP 30 can then download the file and can initiate a fax call by dialing the number stored in its memory.

Figure 4 illustrates a flowchart of an IPP 30 handling an incoming call 52. If an incoming call 52 is not a fax transmission, the IPP enters a voice mode 55 and allows the user to speak to the caller as in a normal telephone call. If the IPP is programmed in an automatic mode (Auto RX 58) and the received call is a facsimile call, the IPP 30 automatically accepts the fax and sends the fax to store in memory 68 or optionally to print the fax. If the IPP 30 is not in an automatic receive mode 58 (e.g., programmed in a manual receive mode) the phone generates a ring 60. If the user does not answer 62, then the incoming fax transmission is forwarded to a fax mail memory 66 , where the fax is temporarily stored until the user decides whether to print it out or to move it to a more permanent storage space 68. This feature is similar to voicemail on a telephone.

In a manual mode, after the IPP 30 rings 60, a user listens for a fax tone and upon hearing the tone, accepts the fax by pressing a receive fax button to indicate the fax is accepted 64. On doing so a fax processing unit receives the fax. If the IPP 30 is in an automatic print mode 70, the print driver 48 initiates printing 72. If the IPP 30 is not in an automatic print mode 70, the fax is stored to on board memory unit 68. A user may choose to store a copy of the incoming fax in the memory 68 and may later transfer it via the network 14 to a different storage location. Note that while a fax is being received and printed or stored, the voice lines are free to receive voice calls. Also in case the user is already on the IPP 30, a call waiting tone can alert the user to the incoming fax which can then be accepted like a second incoming voice call.

Several other features can be added to the fax aware IPP 30. For the transmit side a user can automate the sending of the fax. To do so the IPP can be programmed to automatically download the electronic fax document and send the fax to a preprogrammed phone number. On the receive side, a user can program the device 30 to automatically accept and store 68 or print 72 the fax. This mode is the automatic mode. On the other hand the manual mode requires the user to accept the fax by activating a receive command.

In order to receive the fax in auto receive mode 58, the IPP 30 needs to distinguish an incoming voice call from a fax call. If the fax call is initiated by a conventional fax machine 22 on a remote end, the IPP 30 looks for the CNG tone in the incoming signal. For a call initiated from an Internet-aware fax device (IAF) the IPP 30 looks for fax-specific signals. To detect the signal, there is a hangover time there is a hangover time during which the IPP 30 is looking for the fax-specific signals. If the fax signal is detected then the IPP 30 does not alert the user. Instead it stores the incoming fax in the memory 44 for the user to print at a later time.

In case of manual mode, however the IPP 30 needs to generate the CNG tone for the user to distinguish and accept the incoming call as fax call. In case the incoming call is initiated from a conventional fax machine, the CNG tone is part of incoming signal. However, to receive a fax from another Internet-aware fax device (IAF), the fax aware IPP 30 on recognizing the incoming call as fax call generates the CNG tone locally to alert the user. The user can then accept the fax by activating a receive fax command.

Because many varying and different embodiments may be made within the scope of the inventive concept herein taught, and because many modifications may be made in the embodiments herein detailed in accordance with the descriptive requirements of the law, it is to be understood that the details herein are to be interpreted as illustrative and not in a limiting sense.

## Claims

1. A fax-aware telephone for handling facsimile transmissions over a computer network, comprising:
a facsimile processing unit for handling a facsimile call;
a voice processing unit, operably connected to the facsimile processing unit, for handling a voice call;
a memory unit, operably connected to said facsimile processing unit, for storing an incoming facsimile transmission; and
a file transfer protocol client for transferring said facsimile transmission to said computer network or an external storage device,
wherein said fax-aware telephone handles said facsimile call and said voice call together over a single data line from said computer network.

2. The fax-aware telephone of claim 1, further comprising:
a faxmail unit, operably connected to facsimile processing unit, for temporarily storing said incoming facsimile transmission prior to printing said transmission or storing said transmission in said memory unit.

3. The fax-aware telephone of claim 2, wherein said faxmail unit can send an alert signal to designate the reception of said incoming facsimile transmission.

4. The fax-aware telephone of any of claims 1 - 3, wherein said voice processing unit may send or receive a said voice call while said facsimile processing unit handles said fax call.

5. The fax-aware telephone of any of claims 1 - 4, wherein, if said incoming facsimile transmission is generated by an analog fax machine, said fax-aware telephone searches for a CNG tone in said incoming transmission and when said CNG tone is recognized, performs at least one of storing said incoming transmission in said memory unit or prints said incoming transmission.

6. The fax-aware telephone any of claims 1 - 5, wherein when said incoming facsimile transmission is generated by a network aware facsimile device, said fax-aware telephone recognizes said incoming transmission and generates a CNG tone to alert a user.

7. The fax-aware telephone any of claims 1 - 6, wherein said computer network transmits said fax call and said voice call using Internet protocol.

8. The fax-aware telephone any of claims 1 - 7, further comprising:
a printer driver for printing a fax transmission received by said fax-aware telephone.

9. The fax-aware telephone any of claims 1 - 8, wherein said fax-aware telephone provides a hangover time during reception of a call, and
automatically receives said fax transmission into said memory unit after an incoming fax signal is detected during said hangover time.

10. The fax-aware telephone any of claims 1 - 9, wherein said fax-aware telephone generates a signal for a user to distinguish an incoming call from a facsimile transmission.
